# EUROPEAN PATENT APPLICATION

(11) **EP 3 764 595 A1**
(43) Date of publication of application: **13.01.2021**
(21) Application number: 19777595.0
(22) Date of filing: 04.03.2019
(51) Int. Cl.: H04L 12/24

(54) **COMMUNICATION METHOD AND DEVICE**

(30) Priority: 27.03.2018 CN 201810258983
(71) Applicant: HUAWEI TECHNOLOGIES CO., LTD., Shenzhen, Guangdong 518129 (CN)
(72) Inventor: ZHANG, Kai, Shenzhen, Guangdong 518129 (CN)
(74) Representative: Pfenning, Meinig & Partner mbB
(86) International application number: PCT/CN2019/076902
(87) International publication number: WO 2019/184661

(57) **Abstract**

A communications method and apparatus are disclosed. The method includes: receiving, by a service provider, an alarm service message from a service consumer, where the alarm service message includes an alarm parameter, the alarm service message is used to request an alarm for at least one base object indicated by the alarm parameter, and the at least one base object is a managed object managed by the service provider; and determining, by the service provider, alarm data based on the alarm parameter, and sending the alarm data to the service consumer.

## Description

This application claims priority to Chinese Patent Application No. 201810258983.7, filed with the Chinese Patent Office on March 27, 2018 and entitled "COMMUNICATIONS METHOD AND APPARATUS", which is incorporated herein by reference in its entirety.

### TECHNICAL FIELD

This application relates to the field of communications technologies, and in particular, to a communications method and apparatus.

### BACKGROUND

In a long term evolution (long term evolution, LTE) system, a fault may occur in a managed object such as a network element (network element, NE) or a network function (network function, NF). In this case, 3rd generation partnership project (the 3rd generation partnership project, 3GPP) specifies a process for reporting alarm information when a fault occurs. Specifically, the NE or the NF sends the alarm information to an element management system (element management system, EMS) through a southbound interface, and the EMS sends the collected alarm information to a network management system (network management system, NMS) through a northbound interface. The northbound interface is an interface in particular between the NMS and the EMS, and is also referred as an Itf-N interface (Interface-N interface). In the Itf-N interface, some integration reference points (integration reference point, IRP) such as an alarm management IRP, a basic configuration management IRP, and a notification IPR are defined. With functions provided by these integration reference points, functions of operating and maintaining a network can be completed.

With arrival of 5G, the managed object in the network is no longer only the NE or the NF, and further includes newly added managed objects such as a network slice subnet instance (network slice subnet instance, NSSI), a network slice instance (network slice instance, NSI), and a communication service instance (communication service instance, CSI). Logical entities such as a network slice subnet management function (network slice subnet management function, NSSMF), a network slice management function (network slice management function, NSMF), and a communication service management function (communication service management function, CSMF) are also added as administrators in the network, and various third-party applications (Application Function, AF) are also added as participants in the network. Because an existing northbound interface is closed, a sending party and a receiving party of alarm information need to respectively send and receive the alarm information according to a corresponding specification of the 3GPP northbound interface, and consequently network flexibility is reduced. Therefore, in a future mobile communications system, how to obtain alarm data of a managed object is a problem that needs to be resolved urgently.

### SUMMARY

Embodiments of this application provide a communications method and apparatus, to resolve a problem of how to obtain alarm data of a managed object.

According to a first aspect, an embodiment of this application provides a communication method, including: receiving, by a service provider, an alarm service message from a service consumer, where the alarm service message includes an alarm parameter; and determining, by the service provider, alarm data based on the alarm parameter, and sending the alarm data to the service consumer.

The alarm service message is used to request an alarm for at least one base object indicated by the alarm parameter, and the at least one base object is a managed object managed by the service provider

According to the method provided in this embodiment of this application, after receiving the alarm service message of the service consumer, the service provider provides a service of alarm data at a granularity of a managed network element for the service consumer based on the alarm parameter in the alarm service message, so that different service consumers conveniently obtain corresponding alarm data from the service provider based on actual requirements of the service consumers without a need of transmitting the alarm data by using a conventional northbound interface. In this way, any network element can obtain alarm data from the service provider, thereby improving efficiency of providing the alarm data to the service consumer.

In an optional implementation, before the receiving, by a service provider, an alarm service message from a service consumer, the method further includes:
collecting, by the service provider, alarm information of the managed object managed by the service provider.

According to the foregoing method, before receiving the alarm service message, the service provider can obtain the alarm information in advance, so that the service provider can determine the alarm data more quickly after receiving the alarm service message, thereby improving system efficiency.

In an optional implementation, after the receiving, by a service provider, an alarm service message from a service consumer, the method further includes:
collecting, by the service provider, alarm information of the managed object managed by the service provider, or collecting, by the service provider, alarm information from the at least one base object indicated by the alarm parameter.

In an optional implementation, the alarm parameter is one or more of the following:
a base object class, used to indicate a class of the base object;
a base object instance, used to indicate an instance of the base object; and
a data filter, configured to obtain the alarm data from the alarm information through filtering.

The alarm data can be accurately determined in the alarm information by using the alarm parameter, and the alarm data is provided at a granularity of the base object or the base object instance.

In an optional implementation, the data filter includes at least one of the following filter conditions: alarm severity; an alarm time; an alarm type; and an alarm cause code.

The alarm data can be accurately obtained by using the data filter through filtering, and accuracy of the alarm data service is improved.

In an optional implementation, the alarm service message is an alarm list request message or an alarm subscribe request message.

In an optional implementation, when the alarm service message is the alarm subscribe request message, the method further includes:
receiving, by the service provider, an alarm unsubscribe notification from the service consumer, where the alarm unsubscribe notification is used to instruct the service provider to stop sending the alarm data.

In an optional implementation, the alarm data includes a combination of any one or more of the following:
an alarm identifier; an alarm notification identifier; an alarm raised time; an alarm cleared time; an alarm changed time; an event type; an alarm cause; alarm severity; an alarm root cause indicator; a specific problem; an alarm backup state; an alarm trend indication; alarm threshold information; a state change definition; a monitored related attribute; a proposed repair action; additional text; additional information; an alarm acknowledgment time; an alarm acknowledgment user identifier; an alarm acknowledgment system identifier; an alarm acknowledgment state; an alarm clear user identifier; and an alarm clear system identifier.

In an optional implementation, when the service provider is a data collection and reporting function DCRF network element, a type of the alarm data is network element function alarm data; when the service provider is a network slice subnet instance management function NSSMF network element, a type of the alarm data is network slice subnet instance alarm data; when the service provider is a network slice instance management function NSMF network element, a type of the alarm data is network slice instance alarm data; or when the service provider is a communication service management function CSMF network element, a type of the alarm data is communication service alarm data.

According to a second aspect, an embodiment of this application provides a communications apparatus, including:
a transceiver unit, configured to receive an alarm service message from a service consumer, where the alarm service message includes an alarm parameter, the alarm service message is used to request an alarm for at least one base object indicated by the alarm parameter, and the at least one base object is a managed object managed by the service provider; and
a processing unit, configured to determine alarm data based on the alarm parameter, where
the transceiver unit is configured to send the alarm data to the service consumer.

In an optional implementation, before receiving the alarm service message from the service consumer, the transceiver unit is further configured to collect alarm information of the managed object managed by the service provider.

In an optional implementation, before receiving the alarm service message from the service consumer, the transceiver unit is further configured to collect alarm information of the managed object managed by the service provider, or collect alarm information from the at least one base object indicated by the alarm parameter.

In an optional implementation, the alarm parameter is one or more of the following: a base object class, used to indicate a class of the base object; a base object instance, used to indicate an instance of the base object; and a data filter, configured to obtain the alarm data from the alarm information through filtering.

In an optional implementation, the data filter includes at least one of the following filter conditions: alarm severity; an alarm time; an alarm type; and an alarm cause code.

In an optional implementation, the alarm service message is an alarm list request message or an alarm subscribe request message.

In an optional implementation, when the alarm service message is an alarm subscribe request message, the transceiver unit is further configured to: receive an alarm unsubscribe notification from the service consumer, where the alarm unsubscribe notification is used to instruct the service provider to stop sending the alarm data.

In an optional implementation, the alarm data includes a combination of any one or more of the following:
an alarm identifier; an alarm notification identifier; an alarm raised time; an alarm cleared time; an alarm changed time; an event type; an alarm cause; alarm severity; an alarm root cause indicator; a specific problem; an alarm backup state; an alarm trend indication; alarm threshold information; a state change definition; a monitored related attribute; a proposed repair action; additional text; additional information; an alarm acknowledgment time; an alarm acknowledgment user identifier; an alarm acknowledgment system identifier; an alarm acknowledgment state; an alarm clear user identifier; and an alarm clear system identifier.

In an optional implementation, when the communications apparatus is a data collection and reporting function DCRF network element, a type of the alarm data is network element function alarm data; when the communications apparatus is a network slice subnet instance management function NSSMF network element, a type of the alarm data is network slice subnet instance alarm data; when the communications apparatus is a network slice instance management function NSMF network element, a type of the alarm data is network slice instance alarm data; or when the communications apparatus is a communication service management function CSMF network element, a type of the alarm data is communication service alarm data.

An embodiment of this application provides a service provider, where the service provider includes a memory, a transceiver, and a processor. The memory is configured to store an instruction; and the processor is configured to: execute the instruction stored in the memory, and control the transceiver to receive and send a signal, and when executing the instruction stored in the memory, the processor is configured to perform the method in any one of the first aspect or the possible designs of the first aspect.

An embodiment of this application provides a computer-readable storage medium, where the computer storage medium stores a computer-readable instruction. When a computer reads and executes the computer-readable instruction, the computer is enabled to perform the method in any one of the first aspect or the possible designs of the first aspect.

An embodiment of this application provides a computer program product. When a computer reads and executes the computer program product, the computer is enabled to perform the method in any one of the first aspect or the possible designs of the first aspect.

An embodiment of this application provides a chip. The chip is connected to a memory, and is configured to read and execute a software program stored in the memory, to implement the method in any one of the first aspect or the possible designs of the first aspect.

According to a third aspect, an embodiment of this application provides a communication method, including:
sending, by a service consumer, an alarm service message to a service provider, where the alarm service message includes an alarm parameter, the alarm service message is used to request an alarm for at least one base object indicated by the alarm parameter, and the at least one base object is a managed object managed by the service provider; and
receiving, by the service consumer, alarm data that is from the service provider and that is determined based on the alarm parameter.

According to the method provided in this embodiment of this application, by sending the alarm service message to the service provider, the service consumer obtains a service of alarm data that is provided by the service provider based on the alarm parameter in the alarm service message and that is at a granularity of a managed network element, so that the service consumer obtains the corresponding alarm data from the service provider based on an actual requirement of the service consumer without a need of transmitting the alarm data by using a conventional northbound interface. In this way, any network element can obtain the alarm data from the service provider.

In an optional implementation, the alarm parameter is one or more of the following: a base object class, used to indicate a class of the base object; a base object instance, used to indicate an instance of the base object; and a data filter, configured to obtain the alarm data from the alarm information through filtering.

In an optional implementation, the alarm service message is an alarm list request message or an alarm subscribe request message.

In an optional implementation, when the alarm service message is the alarm subscribe request message, the method further includes:
sending, by the service consumer, an alarm unsubscribe notification to the service provider, where the alarm unsubscribe notification is used to instruct the service provider to stop sending the alarm data.

According to a fourth aspect, an embodiment of this application provides a communications apparatus, including:
a sending unit, configured to send an alarm service message to a service provider, where the alarm service message includes an alarm parameter, the alarm service message is used to request an alarm for at least one base object indicated by the alarm parameter, and the at least one base object is a managed object managed by the service provider; and
a receiving unit, configured to receive alarm data that is from the service provider and that is determined based on the alarm parameter.

In an optional implementation, the alarm parameter is one or more of the following:
a base object class, used to indicate a class of the base object;
a base object instance, used to indicate an instance of the base object; and
a data filter, configured to obtain the alarm data from the alarm information through filtering.

In an optional implementation, the alarm service message is an alarm list request message or an alarm subscribe request message.

In an optional implementation, when the alarm service message is the alarm subscribe request message, the sending unit is further configured to: send an alarm unsubscribe notification to the service provider, where the alarm unsubscribe notification is used to instruct the service provider to stop sending the alarm data.

An embodiment of this application provides a service consumer, where the service consumer includes a memory, a transceiver, and a processor. The memory is configured to store an instruction; and the processor is configured to execute the instruction stored in the memory, and control the transceiver to receive and send a signal, and when executing the instruction stored in the memory, the processor is configured to perform the method in any one of the third aspect or the possible designs of the third aspect.

An embodiment of this application provides a computer-readable storage medium, where the computer storage medium stores a computer-readable instruction. When a computer reads and executes the computer-readable instruction, the computer is enabled to perform the method in any one of the third aspect or the possible designs of the third aspect.

An embodiment of this application provides a computer program product. When a computer reads and executes the computer program product, the computer is enabled to perform the method in any one of the third aspect or the possible designs of the third aspect.

An embodiment of this application provides a chip. The chip is connected to a memory, and is configured to read and execute a software program stored in the memory, to implement the method in any one of the third aspect or the possible designs of the third aspect.

### BRIEF DESCRIPTION OF DRAWINGS

FIG. 1 is a schematic diagram of a system architecture according to an embodiment of this application;
FIG. 2 is a schematic flowchart of a communication method according to an embodiment of this application;
FIG. 3 is a schematic structural diagram of a communications apparatus according to an embodiment of this application;
FIG. 4 is a schematic structural diagram of a communications apparatus according to an embodiment of this application;
FIG. 5 is a schematic structural diagram of a communications apparatus according to an embodiment of this application; and
FIG. 6 is a schematic structural diagram of a communications apparatus according to an embodiment of this application.

### DESCRIPTION OF EMBODIMENTS

The following describes the embodiments of this application in detail with reference to the accompanying drawings of this specification.

The embodiments of this application may be applied to various mobile communications systems, for example, a new radio (new radio, NR) system, a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an advanced long term evolution (advanced long term evolution, LTE-A) system, a universal mobile telecommunications system (universal mobile telecommunication system, UMTS), an evolved long term evolution (evolved long term evolution, eLTE) system, and another communications system such as a future communications system. Specifically, this is not limited herein.

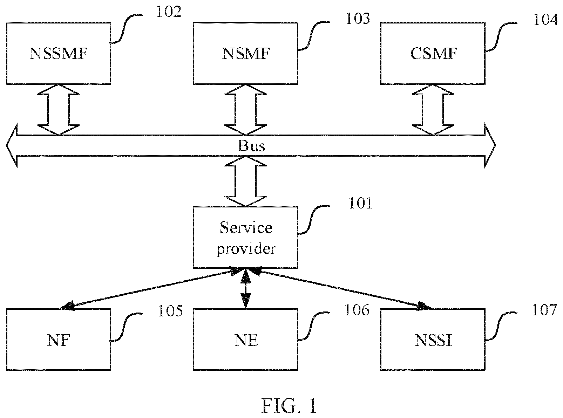

For ease of understanding the embodiments of this application, a communications system shown in FIG. 1 is first used as an example to describe in detail a communications system applicable to the embodiments of this application. FIG. 1 is a schematic diagram of a communications system applicable to a communication method according to the embodiments of this application. As shown in FIG. 1, a service provider (service provider, SP) 101 manages a plurality of managed objects that are respectively an NF 105, an NE 106, an NSSI 107, and the like.

The service provider 101 exchanges information with at least one service consumer (service consumer, SC). In FIG. 1, the service consumer may be an NSSMF 102, an NSMF 103, a CSMF 104, or the like.

It should be noted that in the embodiments of this application, the service provider may be any one of the following logical network elements:
a data collection and reporting function (data collection and reporting function, DCRF); an NSSMF; an NSMF; a CSMF; network management (network management, NM); and element management (element management, EM).

Certainly, the foregoing description is merely an example, and the service provider may alternatively be another network element. Examples are not provided herein one by one for description.

Correspondingly, in the embodiments of this application, the service consumer includes but is not limited to any one of the following logical network elements:
an NSSMF; an NSMF; a CSMF; NM; EM; and a third-party application function (application function, AF).

In the embodiments of this application, the managed object includes but is not limited to any one of the following logical network elements:
an NF; an NE; an NSSI; an NSI; and a CSI.

In the embodiments of this application, the CSMF may be configured to: receive a requirement for a related communication service (Communication Service), convert the requirement to a requirement related to a network slice (Network Slicing), and perform service-related management. It should be noted that, in the embodiments of this application, a function of the CSMF is mainly described, and a name of the CSMF is not limited. For example, the CSMF may also be referred to as a service management function (Service Management Function, SMF).

The CSMF may be an independent management unit, may be a function of any management unit such as a business support system (business support system, BSS), a service management unit, a service orchestration unit, or a service management and orchestration unit.

It should be noted that the CSMF may be included in an operation support system (operation support system, OSS), or may not be included in the OSS. The CSMF may alternatively be a management unit or an operation unit of an upper-layer application (tenant) of a slice.

It should be noted that, in the embodiments of this application, a concept of a network slice (network slice) is a broad concept, and the network slice is a combination of a network function and a corresponding resource that are required to complete a service (or some services), and the network function and the corresponding resource constitute a logically complete network. For example, either a conventional telecommunications network or a dedicated network may be considered as an independent network slice, and a subnet of a network may also be considered as a network slice.

The network management (network management, NM) unit includes one or both of an end-to-end network management function or an end-to-end network orchestration function and may have some or all of the following functions:
end-to-end network management (for example, network life cycle management, network template management, network fault management, network performance management, and network configuration management); an end-to-end network and a subnet and mapping of a network function; coordination of network resources or sub service level agreement (sub service level agreement, sub-SLA) provided by different domains (for example, an access network domain, a core network domain, and a transmission domain); decomposition of a network requirement into subnet requirement information; and central orchestration of subnets and network functions provided by subdomains, so that the subnets or the network functions provided by the different subdomains can meet a requirement on a target service or a network (for example, a requirement on an SLA, a requirement on a key performance indicator (key performance indicator, KPI), and a requirement on quality of service (quality of service, QoS)).

It should be noted that, in the embodiments of this application, a function of the NM is mainly described, and a name of the NM is not limited. The NM may also be referred to as a cross-domain management function (cross domain management function) unit, a cross-domain network slice management function (cross domain network slice management function) unit, a network slice management function unit, or the like.

The NM may be an independent management unit, or may be a function of any management unit: a network orchestration unit, a network management and orchestration unit, a service management unit, a service orchestration unit, a service management and orchestration unit, or an NFVO.

It should be noted that the NM may be included in the OSS, or may not be included in the OSS.

In the embodiments of this application, the network may also be referred to as a network slice or an end-to-end (end to end, E2E) network slice. The network may include at least a core network (core network, CN) part, an access network (access network, AN) part, and a transport network (transport network, TN) part. Alternatively, the network may include any two of the CN part, the AN part, or the TN part. Alternatively, the network may represent a network of the CN part, a network of the AN part, or a network of the TN part. The network may include at least one subnet. Logically, a network is a set of network functions. The subnet herein may also be referred to as a network slice subnet.

A domain management (domain management, DM) unit may also be referred to as an EM, and includes one or both of a subnet management function and an orchestration function, and may have some or all of the following functions:
domain management (including subnet life cycle management (creation, update, and deletion), subnet fault management, subnet performance management, subnet configuration management, and the like); service management (including service life cycle management, service fault management, service performance management, service configuration management, and the like); and coordination of network resources (for example, an NFS and an NE), for unified orchestration.

It should be noted that, in the embodiments of this application, a function of the DM is mainly described, and a name of the DM is not limited. The DM may alternatively be a domain slice management function unit, a network slice subnet management function unit, or the like.

The DM may be an independent management unit, or may be a function of any one of the following management units: a network management unit, a network orchestration unit, a network management and orchestration unit, a network element management unit, a network function management unit, a service management unit, a service orchestration unit, a domain management unit, and a service management and orchestration unit.

It should be noted that the DM may be included in the OSS, or may not be included in the OSS.

A subnet managed by the DM described above may include one or more of the following: an AN part, a CN part, and a TN part. The subnet described above may be considered as a network function or a network element.

When the subnet managed by the DM includes only the AN part, the subnet management unit may be considered as an AN DM. When the subnet managed by the DM includes only the CN part, the subnet management unit may be considered as a CN DM. When the subnet managed by the DM includes the AN part and the CN part, the subnet management unit may be considered as a hybrid DM.

In the embodiments of this application, the third-party AF may be an application from an upper-layer tenant. No limitation is imposed herein on a name of the third-party AF. The third-party AF may be a management unit of an upper-layer tenant, or some application programs of an upper-layer tenant.

The network architecture and the service scenario described in the embodiments of this application are intended to describe the technical solution in the embodiments of this application more clearly, and do not constitute a limitation on the technical solution provided in the embodiments of this application. A person of ordinary skill in the art may learn that, with the evolution of network architecture and the emergence of new service scenarios, the technical solution provided in the embodiments of this application is also applicable to a similar technical problem.

In the embodiments of this application, some scenarios are described by using an NR network scenario in a wireless communications network as an example. It should be pointed out that the solutions in the embodiments of this application may be alternatively applied to another wireless communications network, and a corresponding name may be replaced with a name of a corresponding function in the another wireless communications network.

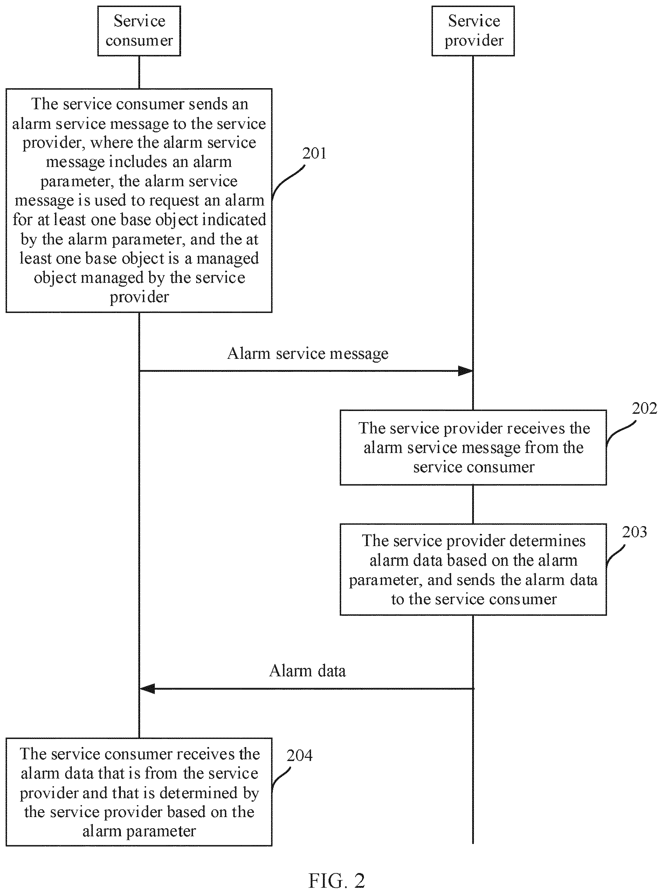

FIG. 2 is a schematic flowchart of a communication method according to an embodiment of this application.

The method includes the following steps:
Step 201: A service consumer sends an alarm service message to a service provider, where the alarm service message includes an alarm parameter, the alarm service message is used to request an alarm for at least one base object indicated by the alarm parameter, and the at least one base object is a managed object managed by the service provider.
Step 202: The service provider receives the alarm service message from the service consumer.
Step 203: The service provider determines alarm data based on the alarm parameter, and sends the alarm data to the service consumer.
Step 204: The service consumer receives the alarm data that is from the service provider and that is determined based on the alarm parameter.

In step 201, the alarm parameter is one or more of the following:
a base object class, used to indicate a class of the base object;
a base object instance, used to indicate an instance of the base object; and
a data filter, configured to obtain the alarm data from the alarm information through filtering. The data filter includes a filter condition, and the filter condition includes but is not limited to one or more of conditions such as a base object instance, alarm severity, an alarm time, an alarm type, and an alarm cause code, and the service provider may send information that is in the collected alarm information and that meets the filter condition in the data filter to the service consumer as the alarm data.

It should be noted that, in this embodiment of this application, the alarm information may be data content related to an active alarm, and the active alarm is an uncleared alarm or an alarm that has been cleared but has not been acknowledged. Alternatively, the alarm information may alternatively be a message such as a historical alarm. This is not limited in this embodiment of this application.

In this embodiment of this application, the alarm service message may be a message such as an alarm list request message or an alarm subscribe request message. A name of the alarm service message is not limited in this embodiment of this application, and examples are not provided herein one by one for description.

In step 202, before receiving the alarm service message, the service provider may collect in advance alarm information of a managed object managed by the service provider. For example, the service provider may periodically collect alarm information of a managed object managed by the service provider, or collect, in a manner of triggering reporting based on an alarm event, alarm information reported by a managed object. Alternatively, after receiving the alarm service message, the service provider may collect alarm information of a managed object managed by the service provider, or collect alarm information only from at least one base object indicated by the alarm parameter.

In this embodiment of this application, there may be a plurality of methods for collecting the alarm information by the service provider. For example, the service provider may actively send a request message to the managed object, to request the managed object to report the alarm information. Alternatively, the managed object actively reports the alarm information to the service provider, or the like.

When service providers are network elements of different types, the service providers may provide different types of alarm data for different types of service consumers. For example, when the service providers are different network elements, alarm data that can be provided may be shown in Table 1:

**Table 1**

| Type of alarm data | Service provider | Service consumer |
|---|---|---|
| Network element function alarm data | DCRF | NSSMF, NSMF, CSMF, NM, EM, and third-party AF |
| Network slice subnet instance alarm data | NSSMF | NSMF, CSMF, NM, EM, and third-party AF |
| Network slice instance alarm data | NSMF | CSMF, NM, EM, and third-party AF |
| Communication service alarm data | CSMF | NM, and third-party AF |

With reference to Table 1, when the service provider is the DCRF, a type of the alarm data that can be provided is network element function alarm data. In this case, the service consumer that requests the alarm data from the service provider may be one or more of the NSSMF, the NSMF, the CSMF, the NM, the EM, and the third-party AF. For another example, when the service provider is the NSSMF, a type of the alarm data that can be provided is network slice subnet instance alarm data. In this case, the service consumer that requests the alarm data from the service provider may be one or more of the NSMF, the CSMF, the NM, the EM, and the third-party AF. For another example, when the service provider is the NSMF, a type of the alarm data that can be provided is network slice subnet instance alarm data. In this case, the service consumer that requests the alarm data from the service provider may be one or more of the CSMF, the NM, the EM, and the third-party AF. For another example, when the service provider is the CSMF, a type of the alarm data that can be provided is communication service alarm data. In this case, the service consumer that requests the alarm data from the service provider may be one or more of the NM or the third-party AF.

The network element function alarm data is alarm data related to a network element function, and includes but is not limited to alarm content, alarm severity, an alarm time, an alarm cause, and a specific problem of the network element function.

The network slice subnet instance alarm data is alarm data related to a network slice subnet instance, and includes but is not limited to alarm content, alarm severity, an alarm time, an alarm cause, and a specific problem of the network slice subnet instance.

The network slice instance alarm data is alarm data related to a network slice instance, and includes but is not limited to alarm content, alarm severity, an alarm time, an alarm cause, and a specific problem of the network slice instance.

The communication service alarm data is alarm data related to a communication service, and includes but is not limited to alarm content, alarm severity, an alarm time, an alarm cause, and a specific problem of the communication service.

Certainly, Table 1 is merely an example, and there may be another relationship between the type of the alarm data, the service provider, and the service consumer, or there may be another service provider or service consumer. Details are not described herein.

In this embodiment of this application, the alarm information service provided by the service provider to the outside may be shown in the Table 2 below:

**Table 2**

| Service name | Description |
|---|---|
| Alarm list request message | Enable the service consumer to request to obtain a current part or all of an alarm information list. |
| Alarm subscribe request message | Enable the service consumer to subscribe to a corresponding alarm information event notification, and when a corresponding alarm information event is generated, the service consumer subscribing to alarm data may receive alarm data that corresponds to the alarm information event. |

With reference to Table 2, in this embodiment of this application, the alarm service message may be an alarm list request message, or may be an alarm subscribe request message. When the alarm service message is the alarm list request message, after the service provider receives the alarm service message sent by the service consumer, the service provider returns, to the service consumer, a response message carrying the alarm data. When the alarm service message is the alarm subscribe request message, after the service provider receives the alarm service message sent by the service consumer, the service provider may send the obtained alarm data to the service consumer periodically or in an event triggering manner.

Specifically, with reference to Table 2, a service operation of each alarm information service may be as shown in Table 3 below:

**Table 3**

| Service name | Service operation | Semantics of an operation | Possible service consumer |
|---|---|---|---|
| Alarm list request message | Alarm list request (GetAlmList) | Request/Response | NFM, NSSMF, NSMF, CSMF, EM, NM, and third-party AF |
| | | Request/Response | |
| | Notify (Notify) | Request/Response | NFM, NSSMF, NSMF, CSMF, EM, NM, and third-party AF |
| | | Request/Response | |
| Alarm subscribe request message | Alarm subscribe (Subscribe) | Subscribe/Notify | NFM, NSSMF, NSMF, CSMF, EM, NM, and third-party AF |
| | | subscribe/Notify | |
| | Unsubscribe (Unsubscribe) | Unsubscribe/Notify | NFM, NSSMF, NSMF, CSMF, EM, NM, and third-party AF |
| | | unsubscribe/Notify | |
| | Notify (Notify) | Unsubscribe/Notify | NFM, NSSMF, NSMF, CSMF, EM, NM, and third-party AF |
| | | unsubscribe/Notify | |

With reference to Table 3, for example, when the service operation is an alarm list request, and when the service consumer sends an alarm list request message, the alarm parameter included in the alarm list request message may be at least one of the following: a base object class (baseObjectClass), a base object instance (baseObjectlnstance), a data filter (filter), and the like.

For another example, when the service operation is alarm subscribe, and when the service consumer sends an alarm subscribe request message, the alarm parameter included in the alarm subscribe request message may be at least one of the following: a base object class, a base object instance, a data filter (filter), and the like.

It should be noted that, the alarm service message may further include other content, and examples are not provided herein one by one for description.

In this embodiment of this application, an alarm function (Alarm Function) exists in the service provider, and the alarm function is used to provide an alarm information service. For the service consumer, the alarm function is not perceived, and the service consumer uses only the alarm information service provided by the service provider. It should be noted that, the internal alarm function may also be implemented in other forms, and examples are not provided herein one by one for description.

In step 203, when the alarm parameter is the base object class, the service provider determines information that belongs to the base object class and that is in the collected alarm information as the alarm data. When the alarm parameter is the base object instance, the service provider determines information that belongs to the base object instance and that is in the collected alarm information as the alarm data.

When the alarm parameter is the base object class and the data filter, the service provider determines information that belongs to the base object class and meets the filter condition of the data filter and that is in the collected alarm information, as the alarm data.

When the alarm parameter is the base object instance and the data filter, the service provider determines information that belongs to the base object instance and meets the filter condition of the data filter and that is in the collected alarm information, as the alarm data.

When the alarm parameter is the base object class, the base object instance, and the data filter, the service provider determines information that belongs to the base object class and the base object instance and meets the filter condition of the data filter and that is in the collected alarm information, as the alarm data.

Certainly, the service provider may alternatively determine the alarm data based on the alarm parameter in other manners, and examples are not provided herein one by one for description.

The alarm data determined by the service provider includes a combination of any one or more of the following information:
an alarm identifier alarmId; an alarm notification identifier notificationId; an alarm raised time alarmRaisedTime; an alarm cleared time alarmClearedTime; an alarm changed time alarmChangedTime; an event type eventType; an event cause probableCause; alarm severity perceivedSeverity; an alarm root cause indicator rootCauseIndicator; a specific problem specificProblem; an alarm backup status backedUpStatus; an alarm trend indication trendIndication; alarm threshold information thresholdInfo; a state change definition stateChangeDefinition; a monitored related attribute monitoredAttributes; a proposed repair action proposedRepairActions; additional text additionalText; additional information additionalInformation; an alarm acknowledgment time ackTime; an alarm acknowledgement user identifier ackUserId; an alarm acknowledgement system identifier ackSystemId; an alarm acknowledgement state ackState; an alarm clear user identifier clearUserId; and an alarm clear system identifier clearSystemId.

Specific content of the foregoing information is not described herein in this embodiment of this application. For details, refer to the descriptions of the prior-art literature.

In step 204, when the alarm service message is the alarm subscribe request message, the service consumer may further send an alarm unsubscribe notification to the service provider. The alarm unsubscribe notification is used to instruct the service provider to stop sending the alarm data. The service provider no longer sends the alarm data to the service consumer after receiving the alarm unsubscribe notification from the service consumer.

According to the method provided in this embodiment of this application, the service provider provides a service of alarm data at a granularity of a managed network element for the service consumer, so that different service consumers obtain corresponding alarm data from the service provider based on actual requirements of the service consumers without a need of transmitting the alarm data by using a conventional northbound interface. In this way, any network element can obtain alarm data from the service provider.

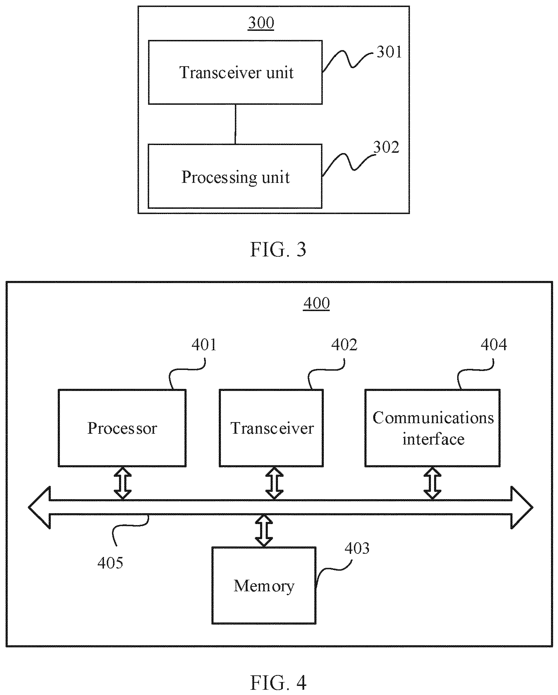

FIG. 3 is a schematic structural diagram of a communications apparatus according to an embodiment of this application. The communications apparatus may perform an action of the service provider in the foregoing method embodiments. Optionally, the communications apparatus may be an NSSMF, an NSMF, a CSMF, NM, EM, or the like. The communications apparatus 300 includes: a transceiver unit 301 and a processing unit 302.

The transceiver unit 301 is configured to receive an alarm service message from a service consumer. The alarm service message includes an alarm parameter, the alarm service message is used to request an alarm for at least one base object indicated by the alarm parameter, and the at least one base object is a managed object managed by the service provider.

The processing unit 302 is configured to determine alarm data based on the alarm parameter.

The transceiver unit 301 is configured to send the alarm data to the service consumer.

In an optional implementation, before receiving the alarm service message from the service consumer, the transceiver unit 301 is further configured to:
collect alarm information of the managed object managed by the service provider.

In an optional implementation, before receiving the alarm service message from the service consumer, the transceiver unit 301 is further configured to:
collect alarm information of the managed object managed by the service provider, or collect alarm information from the at least one base object indicated by the alarm parameter.

In an optional implementation, the alarm parameter is one or more of the following:
a base object class, used to indicate a class of the base object;
a base object instance, used to indicate an instance of the base object; and
a data filter, configured to obtain the alarm data from the alarm information through filtering.

In an optional implementation, the data filter includes at least one of the following filter conditions: alarm severity; an alarm time; an alarm type; and an alarm cause code.

In an optional implementation, the alarm service message is an alarm list request message or an alarm subscribe request message.

In an optional implementation, when the alarm service message is the alarm subscribe request message, the transceiver unit 301 is further configured to:
receive an alarm unsubscribe notification from the service consumer, where the alarm unsubscribe notification is used to instruct the service provider to stop sending the alarm data.

In an optional implementation, the alarm data includes a combination of any one or more of the following:
an alarm identifier; an alarm notification identifier; an alarm raised time; an alarm cleared time; an alarm changed time; an event type; an alarm cause; alarm severity; an alarm root cause indicator; a specific problem; an alarm backup state; an alarm trend indication; alarm threshold information; a state change definition; a monitored related attribute; a proposed repair action; additional text; additional information; an alarm acknowledgment time; an alarm acknowledgment user identifier; an alarm acknowledgment system identifier; an alarm acknowledgment state; an alarm clear user identifier; and an alarm clear system identifier.

In an optional implementation, when the communications apparatus is a data collection and reporting function DCRF network element, a type of the alarm data is network element function alarm data;
when the communications apparatus is a network slice subnet instance management function NSSMF network element, a type of the alarm data is network slice subnet instance alarm data;
when the communications apparatus is a network slice instance management function NSMF network element, a type of the alarm data is network slice instance alarm data; or
when the communications apparatus is a communication service management function CSMF network element, a type of the alarm data is communication service alarm data.

FIG. 4 is a schematic structural diagram of a communications apparatus according to an embodiment of this application. The communications apparatus may perform an action of the service provider in the foregoing method embodiments. Optionally, the communications apparatus may be an NSSMF, an NSMF, a CSMF, NM, EM, or the like. The communications apparatus 400 includes: a processor 401, a transceiver 402, a memory 403, and a communications interface 404. The processor 401, the transceiver 402, the memory 403, and the communications interface 404 are connected to each other by using a bus 405.

The processor 401 may be a central processing unit (central processing unit, CPU), a network processor (network processor, NP), or a combination of the CPU and the NP. The processor 410 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), generic array logic (generic array logic, GAL), or any combination thereof.

The memory 403 may include a volatile memory (volatile memory), for example, a random access memory (random-access memory, RAM); or the memory may include a non-volatile memory (non-volatile memory), for example, a flash memory (flash memory), a hard disk drive (hard disk drive, HDD), or a solid-state drive (solid-state drive, SSD); or the memory 403 may include a combination of the foregoing types of memories.

The communications interface 404 may be a wired communications interface, a wireless communications interface, or a combination thereof. The wired communications interface may be, for example, an Ethernet interface. The Ethernet interface may be an optical interface, an electrical interface, or a combination thereof. The wireless communications interface may be a WLAN interface.

The bus 405 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one double-headed arrow is used to represent the bus in FIG. 4, but this does not mean that there is only one bus or only one type of bus.

The transceiver 402 is configured to receive an alarm service message from a service consumer. The alarm service message includes an alarm parameter, the alarm service message is used to request an alarm for at least one base object indicated by the alarm parameter, and the at least one base object is a managed object managed by the service provider.

The processor 401, configured to determine alarm data based on the alarm parameter.

The transceiver 402 is configured to send the alarm data to the service consumer.

The communications apparatus 400 may further perform another action. For details, refer to the foregoing description. Details are not described herein again.

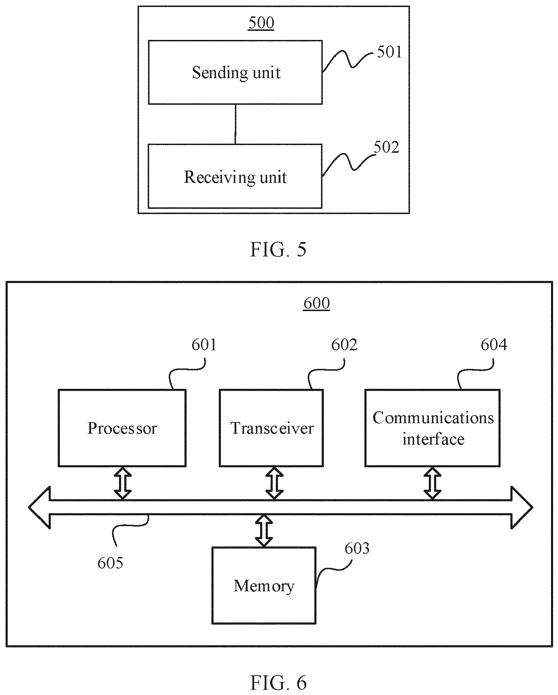

FIG. 5 is a schematic structural diagram of a communications apparatus according to an embodiment of this application. The communications apparatus may perform an action of the service consumer in the foregoing method embodiments. Optionally, the communications apparatus may be an NSSMF, an NSMF, a CSMF, NM, EM, or the like. The communications apparatus 500 includes: a sending unit 501 and a receiving unit 502.

The sending unit 501 is configured to send an alarm service message to a service provider. The alarm service message includes an alarm parameter, the alarm service message is used to request an alarm for at least one base object indicated by the alarm parameter, and the at least one base object is a managed object managed by the service provider.

The receiving unit 502 is configured to receive alarm data that is from the service provider and that is determined based on the alarm parameter.

In an optional implementation, the alarm parameter is one or more of the following:
a base object class, used to indicate a class of the base object;
a base object instance, used to indicate an instance of the base object; and
a data filter, configured to obtain the alarm data from the alarm information through filtering.

In an optional implementation, the alarm service message is an alarm list request message or an alarm subscribe request message.

In an optional implementation, when the alarm service message is the alarm subscribe request message, the sending unit 301 is further configured to:
send an alarm unsubscribe notification to the service provider, where the alarm unsubscribe notification is used to instruct the service provider to stop sending the alarm data.

Referring to FIG. 6, an embodiment of this application further provides a schematic structural diagram of a communications apparatus. The communications apparatus may perform an action of the service consumer in the foregoing method embodiments. Optionally, the communications apparatus may be an NSSMF, an NSMF, a CSMF, NM, EM, or the like. The communications apparatus 600 includes: a processor 601, a transceiver 602, a memory 603, and a communications interface 604. The processor 601, the transceiver 602, the memory 603, and the communications interface 604 are connected to each other by using a bus 605. For specific content of the foregoing modules, refer to the descriptions of related modules in FIG. 5. Details are not described herein again.

The memory 603 may be configured to store a program instruction, and the processor 601 invokes the program instruction stored in the memory 603 to perform the following operations:
sending an alarm service message to a service provider by using a transceiver 602, where the alarm service message includes an alarm parameter, the alarm service message is used to request an alarm for at least one base object indicated by the alarm parameter, and the at least one base object is a managed object managed by the service provider; and
receiving, by using the transceiver 602, alarm data that is from the service provider and that is determined based on the alarm parameter.

In an optional implementation, the alarm parameter is one or more of the following:
a base object class, used to indicate a class of the base object;
a base object instance, used to indicate an instance of the base object; and
a data filter, configured to obtain the alarm data from the alarm information through filtering.

In an optional implementation, the alarm service message is an alarm list request message or an alarm subscribe request message.

In an optional implementation, when the alarm service message is the alarm subscribe request message, the transceiver 602 is further configured to:
send an alarm unsubscribe notification to the service provider, where the alarm unsubscribe notification is used to instruct the service provider to stop sending the alarm data.

An embodiment of this application further provides a computer-readable storage medium, configured to store a computer software instruction executed by the processor 401. The computer software instruction includes a program executed by the processor 401.

An embodiment of this application further provides a computer-readable storage medium, configured to store a computer software instruction executed by the processor 601. The computer software instruction includes a program executed by the processor 601.

An embodiment of this application further provides a system, including: the communications apparatus shown in FIG. 4 and the communications apparatus shown in FIG. 6.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

It is clear that a person skilled in the art can make various modifications and variations to this application without departing from the spirit and scope of this application. This application is also intended to cover these modifications and variations of this application provided that the modifications and variations fall within the scope of protection defined by the following claims and their equivalent technologies.

## Claims

1. A communication method, comprising:
receiving, by a service provider, an alarm service message from a service consumer, wherein the alarm service message comprises an alarm parameter, the alarm service message is used to request an alarm for at least one base object indicated by the alarm parameter, and the at least one base object is a managed object managed by the service provider; and
determining, by the service provider, alarm data based on the alarm parameter, and sending the alarm data to the service consumer.

2. The method according to claim 1, wherein before the receiving, by a service provider, an alarm service message from a service consumer, the method further comprises:
collecting, by the service provider, alarm information of the managed object managed by the service provider.

3. The method according to claim 1, wherein after the receiving, by a service provider, an alarm service message from a service consumer, the method further comprises:
collecting, by the service provider, alarm information of the managed object managed by the service provider, or collecting, by the service provider, alarm information from the at least one base object indicated by the alarm parameter.

4. The method according to any one of claims 1 to 3, wherein the alarm parameter is one or more of the following:
a base object class, used to indicate a class of the base object;
a base object instance, used to indicate an instance of the base object; and
a data filter, configured to obtain the alarm data from the alarm information through filtering.

5. The method according to claim 4, wherein the data filter comprises at least one of the following filter conditions: alarm severity; an alarm time; an alarm type; and an alarm cause code.

6. The method according to any one of claims 1 to 5, wherein the alarm service message is an alarm list request message or an alarm subscribe request message.

7. The method according to any one of claims 1 to 6, wherein when the alarm service message is the alarm subscribe request message, the method further comprises:
receiving, by the service provider, an alarm unsubscribe notification from the service consumer, wherein the alarm unsubscribe notification is used to instruct the service provider to stop sending the alarm data.

8. The method according to any one of claims 1 to 7, wherein the alarm data comprises a combination of any one or more of the following:
an alarm identifier; an alarm notification identifier; an alarm raised time; an alarm cleared time; an alarm changed time; an event type; an alarm cause; alarm severity; an alarm root cause indicator; a specific problem; an alarm backup state; an alarm trend indication; alarm threshold information; a state change definition; a monitored related attribute; a proposed repair action; additional text; additional information; an alarm acknowledgment time; an alarm acknowledgment user identifier; an alarm acknowledgment system identifier; an alarm acknowledgment state; an alarm clear user identifier; and an alarm clear system identifier.

9. The method according to any one of claims 1 to 8, wherein when the service provider is a data collection and reporting function DCRF network element, a type of the alarm data is network element function alarm data;
when the service provider is a network slice subnet instance management function NSSMF network element, a type of the alarm data is network slice subnet instance alarm data;
when the service provider is a network slice instance management function NSMF network element, a type of the alarm data is network slice instance alarm data; or
when the service provider is a communication service management function CSMF network element, a type of the alarm data is communication service alarm data.

10. A communication method, comprising:
sending, by a service consumer, an alarm service message to a service provider, wherein the alarm service message comprises an alarm parameter, the alarm service message is used to request an alarm for at least one base object indicated by the alarm parameter, and the at least one base object is a managed object managed by the service provider; and
receiving, by the service consumer, alarm data that is from the service provider and that is determined based on the alarm parameter.

11. The method according to claim 10, wherein the alarm parameter is one or more of the following:
a base object class, used to indicate a class of the base object;
a base object instance, used to indicate an instance of the base object; and
a data filter, configured to obtain the alarm data from the alarm information through filtering.

12. The method according to any one of claims 10 to 11, wherein the alarm service message is an alarm list request message or an alarm subscribe request message.

13. The method according to any one of claims 10 to 12, wherein when the alarm service message is the alarm subscribe request message, the method further comprises:
sending, by the service consumer, an alarm unsubscribe notification to the service provider, wherein the alarm unsubscribe notification is used to instruct the service provider to stop sending the alarm data.

14. A communications apparatus, comprising:
a transceiver unit, configured to receive an alarm service message from a service consumer, wherein the alarm service message comprises an alarm parameter, the alarm service message is used to request an alarm for at least one base object indicated by the alarm parameter, and the at least one base object is a managed object managed by the service provider; and
a processing unit, configured to determine alarm data based on the alarm parameter, wherein
the transceiver unit is configured to send the alarm data to the service consumer.

15. The apparatus according to claim 14, wherein after receiving the alarm service message from the service consumer, the transceiver unit is further configured to:
collect alarm information of the managed object managed by the service provider, or collect alarm information from the at least one base object indicated by the alarm parameter.

16. The apparatus according to claim 14 or 15, wherein the alarm parameter is one or more of the following:
a base object class, used to indicate a class of the base object;
a base object instance, used to indicate an instance of the base object; and
a data filter, configured to obtain the alarm data from the alarm information through filtering.

17. The apparatus according to claim 14, wherein the data filter comprises at least one of the following filter conditions: alarm severity; an alarm time; an alarm type; and an alarm cause code.

18. The apparatus according to any one of claims 14 to 17, wherein when the communications apparatus is a data collection and reporting function DCRF network element, a type of the alarm data is network element function alarm data;
when the communications apparatus is a network slice subnet instance management function NSSMF network element, a type of the alarm data is network slice subnet instance alarm data;
when the communications apparatus is a network slice instance management function NSMF network element, a type of the alarm data is network slice instance alarm data; or
when the communications apparatus is a communication service management function CSMF network element, a type of the alarm data is communication service alarm data.

19. A communications apparatus, comprising:
a sending unit, configured to send an alarm service message to a service provider, wherein the alarm service message comprises an alarm parameter, the alarm service message is used to request an alarm for at least one base object indicated by the alarm parameter, and the at least one base object is a managed object managed by the service provider; and
a receiving unit, configured to receive alarm data that is from the service provider and that is determined based on the alarm parameter.

20. The apparatus according to claim 19, wherein the alarm parameter is one or more of the following:
a base object class, used to indicate a class of the base object;
a base object instance, used to indicate an instance of the base object; and
a data filter, configured to obtain the alarm data from the alarm information through filtering.

21. A communications apparatus, configured to perform the method according to any one of claims 1 to 13.

22. A communications apparatus, comprising at least one processor, wherein the at least one processor is coupled to at least one memory; and
the at least one processor is configured to execute a computer program or an instruction stored in the at least one memory, to enable the apparatus to perform the method according to any one of claims 1 to 13.

23. A readable storage medium, comprising a program or an instruction, and when the program or the instruction is executed, the method according to any one of claims 1 to 13 is performed.
